# EUROPÄISCHE PATENTANMELDUNG

(11) **EP 0 671 576 A1**
(43) Veröffentlichungstag der Anmeldung: **13.09.1995**
(21) Anmeldenummer: 95100340.9
(22) Anmeldetag: 12.01.1995
(51) Int. Cl.: F16J 15/32

(54) **Abstreifvorrichtung**

(30) Priorität: 12.03.1994 DE 4408408
(71) Anmelder: Festo KG, D-73734 Esslingen (DE)
(72) Erfinder: Stoll, Kurt, Dr., D-73732 Esslingen (DE); Schlötzer, Eugen, D-91126 Schwabach (DE); Köngeter, Herbert, D-73262 Reichenbach (DE)
(74) Vertreter: Abel, Martin, Dipl.-Ing.

(57) **Zusammenfassung**

Es wird eine Abstreifvorrichtung (4) vorgeschlagen, die einen Abstreifring (7) und einen Sicherungsring (8) umfaßt. Der Abstreifring (7) ist in Gebrauchsstellung an einer Halterung (1) festgelegt und umschließt ein axial bewegbares stangenförmiges Bauteil (3). Der Sicherungsring (8) ist federelastisch ausgebildet und greift zur axialen halterungsseitigen Fixierung des Abstreifringes (7) in eine an der Halterung (1) vorgesehene Ringnut (13) ein. Der Abstreifring (7) und der Sicherungsring (8) sind unter Bildung einer Montageeinheit aneinander befestigt. Auf diese Weise läßt sich die Abstreifvorrichtung relativ einfach herstellen und handhaben.

## Beschreibung

Die Erfindung betrifft eine Abstreifvorrichtung, mit einem Abstreifring der in Gebrauchsstellung an einer Halterung festgelegt ist und ein bezüglich ihm und der Halterung axial bewegbares stangenförmiges Bauteil umschließt, und mit einem federelastischen Sicherungsring, der zur axialen halterungsseitigen Fixierung des Abstreifringes in eine an der Halterung vorgesehene Ringnut eingreift, und der zwei einander zugewandte Ringenden aufweist, die bei der Montage des Sicherungsringes zur Herbeiführung einer Durchmesseränderung des Sicherungsringes im Sinne einer Verringerung oder Vergrößerung ihres Abstandes relativ zueinander bewegbar sind.

Eine Abstreifvorrichtung dieser Art geht aus der DE 40 10 953 A1 hervor. Sie wird vor allem bei Arbeitszylindern verwendet, um an der einfahrenden Kolbenstange anhaftende Verunreinigungen abzustreifen. Die Halterung ist in diesem Fall vom Zylindergehäuse gebildet, das eine von der Kolbenstange durchsetzte Durchbrechung aufweist, in der die Abstreifvorrichtung festgelegt ist. Bei der Montage der Abstreifvorrichtung wird zuerst der Abstreifring in die Ausnehmung eingeführt und anschließend der Sicherungsring in die Ringnut eingesetzt. Der Sicherungsring ist ein federelastisches Bauteil, das an einer Stelle seines Umfanges unterbrochen ist, so daß es zum Einsetzen in die Ringnut vorübergehend im Sinne einer Durchmesserverringerung elastisch verformbar ist.

Der bekannte Abstreifring ist Bestandteil eines Elastomerkörpers, der gleichzeitig eine Dichtlippe trägt und in Gebrauchsstellung mit einer Haltepartie zwischen einer halterungsfesten Stufe und dem Sicherungsring gehalten ist. Um Axialbewegungen des Abstreifringes zu begrenzen, bedarf es einer exakten Abstimmung der axialen Baulängen der Haltepartie und des diese aufnehmenden Zwischenraumes zwischen der Stufe und dem Sicherungsring, was einen gewissen Fertigungsaufwand erfordert. Außerdem ist es häufig nicht einfach, den in der Durchbrechung festsitzenden Abstreifring im Bedarfsfalle zu demontieren.

Es ist die Aufgabe der vorliegenden Erfindung, eine Abstreifvorrichtung der eingangs genannten Art zu schaffen, die mit einfacheren Mitteln eine sichere Fixierung des Abstreifringes an der Halterung ermöglicht und bei Bedarf mit wenig Aufwand montierbar oder demontierbar ist.

Zur Lösung der Aufgabe ist erfindungsgemäß vorgesehen, daß der Abstreifring und der Sicherungsring unter Bildung einer Montageeinheit aneinander befestigt sind.

Auf diese Weise bedarf es außer dem Sicherungsring keines weiteren halterungsfesten Bestandteils, um eine axial unbewegliche Fixierung des Abstreifringes zu gewährleisten. Der Abstreifring ist in der Gebrauchsstellung über den ständig mit ihm verbundenen Sicherungsring an der Halterung aufgehängt. Somit reicht halterungsseitig als Befestigungsmaßnahme die Bereitstellung der Ringnut für den Sicherungsring aus, was zu einer Kostenreduzierung beiträgt. Auch die Montage und eventuell notwendige Demontage der Abstreifvorrichtung ist erheblich vereinfacht, da der Abstreifring und der Sicherungsring zu einer Montageeinheit kombiniert sind, die sich wie ein Bauteil handhaben läßt, und bei der Montage und Demontage in jeweils einem einzigen Arbeitsgang an der Halterung festgelegt oder von dieser entfernt werden können.

Da halterungssseitig die Ringnut zur Befestigung der Abstreifvorrichtung ausreicht, können auch bereits vorhandene Gerätschaften, insbesondere Arbeitszylinder, problemlos mit der erfindungsgemäßen Abstreifvorrichtung nachgerüstet werden. Zumal sich axial kompakte Einbauabmessungen einhalten lassen.

Aus der DE 31 27 714 C2 ist es bereits bekannt, zwei Bauteile unter Bildung einer Montageeinheit aneinander zu befestigen. Es handelt sich dort allerdings um die Kombination eines Dichtelementes mit einem Sprengring im Zusammenhang mit einem Mengenregulierventil aus dem entfernten Fachgebiet der Sanitärtechnik. Das Dichtelement ist axial zwischen zwei Scheiben angeordnet, um diese wasserdicht gegeneinander abzudichten.

Vorteilhafte Weiterbildungen der Erfindung sind in den Unteransprüchen aufgeführt.

Eine besonders vorteilhafte Ausführungsform sieht vor, daß der Sicherungssring und der Abstreifring einstückig miteinander ausgebildet sind und ein einziges integrales Bauteil bilden. Ist dabei als Werkstoff ein Kunststoffmaterial gewählt, ist eine kostengünstige Herstellung im Rahmen eines Gießverfahrens, beispielsweise durch Spritzgießen, möglich.

Befinden sich an den beiden Ringenden des Sicherungsringes Werkzeugangriffspartien für eine Montagezange, so läßt sich die Abstreifvorrichtung als Ganzes in einer Art und Weise montieren, die der Montage eines konventionellen Sicherungsringes entspricht.

In dem Zwischenraum zwischen den beiden Ringenden des Sicherungsringes ist zweckmäßigerweise eine mit den beiden Ringenden und mit der angrenzenden Partie des Abstreifringes vorzugsweise einstückig verbundene flexible Abschirmwand vorgesehen. Die Abschirmwand hält in der Luft schwebende Verunreinigungen zurück, wobei die flexible Ausgestaltung sicherstellt, daß die bei der Montage erforderliche Tangentialverformung des Sicherungsringes nicht behindert wird. Zweckmäßigerweise hat die Abschirmwand hierbei eine wellen- oder faltenartige Gestalt.

Vorzugsweise ist der Verbindungsbereich zwischen dem Sicherungsring und dem Abstreifring als Verformungsbereich ausgebildet, der ein Verbiegen des Sicherungsringes in Umfangs- und Radialrichtung relativ zu dem Abstreifring ermöglicht, ohne daß sich die Kontur der Abstreiflippe ändert. Dadurch ist selbst bei eingebauter Kolbenstange eine Montage oder Demontage möglich. Im Gegensatz zu der Montageeinheit aus der DE 31 27 714 C2 läßt sich der Sicherungsring elastisch verformen, ohne daß sich die Abstreiflippe mit verformt. Auch bei auf der Kolbenstange sitzender Abstreifvorrichtung läßt sich somit der Sicherungsring betätigen.

Insbesondere wenn der Abstreifring aus Kunststoffmaterial besteht, kann es zweckmäßig sein, einen aus härterem Material bestehenden zweiten Abstreifring vorzuschalten, der die stärker anhaftenden Partikel von dem sich axial bewegenden stangenförmigen Bauteil abstreift. Dieser zweite Abstreifring besteht vorzugsweise aus Metall. Er ist zweckmäßigerweise an einer wulstartigen Ausformung des ersten Abstreifringes festgelegt, die sich in Ring-Umfangsrichtung erstreckt und aufgrund einer U-ähnlichen Wandprofilierung ein gutes Verformungsverhalten des am ersten Abstreifring vorgesehenen Sicherungsringes gewährleistet. Die wulstartige Ausformung ist zweckmäßigerweise nicht in sich geschlossen, sondern weist im radialen Nachbarbereich der beiden Ringenden des Sicherungsringes eine Unterbrechung auf, die zum Erhalt des Verformungsvermögens beitragen kann, das die zu Montagezwecken erforderliche Verformung des Sicherungringes erleichtert.

Nachfolgend wird die Erfindung anhand der beiliegenden Zeichnung näher erläutert. In dieser zeigen:
- Figur 1: eine bevorzugte Bauform der erfindungsgemäßen Abstreifvorrichtung in Gebrauchssstellung an einem Arbeitszylinder montiert, das Ganze im Längsschnitt entlang einer sich axial und radial erstreckenden Schnittebene gemäß Schnittlinie I-I aus Figur 2, in einer Teildarstellung,
- Figur 2: die Anordnung aus Figur 1 in Vorderansicht gemäß Schnittlinie II-II aus Figur 1, wobei der vorgeschaltete zweite Abstreifring nicht gezeigt ist,
- Figur 3: eine perspektivische Einzeldarstellung des sich aus dem Abstreifring und dem Sicherungsring zusammensetzenden einheitlichen Ringteils,
- Figur 4: einen Querschnitt durch das kombinierte Ringteil der Figur 3 entsprechend Schnittlinie IV-IV,
- Figur 5: den beim Ausführungsbeispiel der Figur 1 vorgeschalteten zweiten Abstreifring in Vorderansicht entsprechend Schnittlinie V-V, und
- Figur 6: eine weitere Ausführungsform des zweiten Abstreifringes in einer der Figur 5 entsprechenden Darstellungsweise.

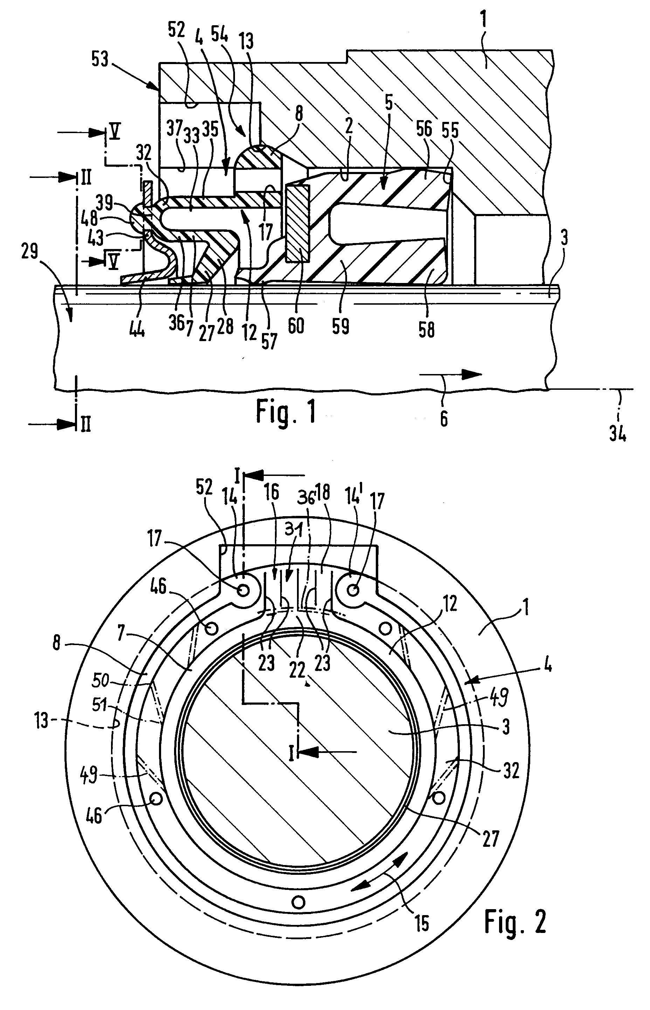

In Figuren 1 und 2 ist der Endabschnitt des Gehäuses 1 eines Arbeitszylinders gezeigt, in dem ein nicht näher dargestellter Kolben axial beweglich aufgenommen ist. Im Bereich wenigstens einer Stirnseite verfügt das Gehäuse 1 über eine axial durchgehende Durchbrechung 2, die von einer mit dem Kolben verbundenen Kolbenstange 3 koaxial und axial beweglich durchsetzt wird. In der Durchbrechung 2 ist eine ringförmige Abstreifvorrichtung 4 unter Einnahme einer Gebrauchsstellung gehäuseseitig festgelegt, die die Kolbenstange 3 koaxial umschließt. Desweiteren befindet sich in der Durchbrechung 2 axial innerhalb der Abstreifvorrichtung 4 auf deren dem Kolben zugewandten Innenseite eine ringförmige Dichtungsanordnung 5, die ebenfalls gehäuseseitig fixiert ist und die Kolbenstange 3 koaxial umschließt. Die Dichtungsanordnung 5 verhindert einen Austritt von Druckmittel aus dem Innenraum des Gehäuses 1 durch die Durchbrechung 2 hindurch. Die Abstreifvorrichtung 4 verhindert den Eintritt von Verunreinigungen, indem sie am Außenumfang der Kolbenstange 3 anhaftende Verschmutzungen von der gemäß Pfeil 6 axial einfahrenden Kolbenstange 3 abstreift.

Das Gehäuse 1 bildet somit eine Halterung für die Abstreifvorrichtung 4 und die Dichtungsanordnung 5, welche letzteren mit dem als Kolbenstange 3 ausgebildeten stangenförmigen Bauteil dynamisch berührend zusammenwirken.

Die Abstreifvorrichtung 4 umfaßt einen Abstreifring 7 und einen bezüglich diesem koaxial angeordneten, federelastische Eigenschaften aufweisenden Sicherungsring 8. Der Abstreifring 7 und der Sicherungsring 8 sind ständig aneinander befestigt, wobei die Befestigung vorzugsweise im Rahmen einer einstückigen Verbindung verwirklicht ist. Bei dieser mit dem Ausführungsbeispiel übereinstimmenden Bauform sind der Abstreifring 7 und der Sicherungsring 8 zu einem integralen einheitlichen Ringteil 12 mit einer ringförmigen Abstreifpartie und einer ringförmigen Sicherungspartie zusammengefaßt. Der Abstreifring 7 und der Sicherungsring 8 bilden somit eine gemeinsam handhabbare Montageeinheit, die Montage in der Durchbrechung 2 erfolgt für den Abstreifring 7 und den Sicherungsring 8 gemeinsam in ein und demselben Arbeitsgang. Eine getrennte Handhabung separater Bauteile erübrigt sich damit, was die Montage erheblich vereinfacht. Auch an die konstruktive Ausgestaltung der die Abstreifvorrichtung 4 aufnehmenden Durchbrechung 2 sind nur geringe und kostengünstig zu verwirklichende Anforderungen gestellt, da das Ringteil 12 und somit der Abstreifring 7 ausschließlich über den Sicherungsring 8 an der Halterung 1 befestigt sind. Auf eine zusätzliche halterungsfeste Abstützung im Bereich des Abstreifringes 7 kann ohne weiteres verzichtet werden.

Der Sicherungsring 8 sitzt in einer in sich geschlossenen Ringnut 13, die in eine zylindrische Innenumfangsfläche der Durchbrechung 2 eingelassen. Der Sicherungsring 8 selbst ist nicht vollständig geschlossen, sondern an einer Stelle des Umfanges unterbrochen, wobei sich die beiden einander zugewandten Ringenden 14, 14' des Sicherungsringes 8 in Ringumfangsrichtung 15 mit Abstand gegenüberliegen. Die Durchmesser des Sicherungsringes 8 und der Ringnut 13 sind so aufeinander abgestimmt, daß der Sicherungsring 8 in dem abgebildeten montierten Zustand unter radialer Spannung in der Ringnut 13 eingespannt ist. Wie bereits erwähnt, ist der Sicherungsring 8 federelastisch verformbar, wobei sein Außendurchmesser im demontierten Zustand größer ist als der Innendurchmesser der Ringnut 13. Zur Montage wird der Sicherungsring 8 in Umfangsrichtung 15 verformt, wobei sich der Zwischenraum 16 zwischen den beiden Ringenden 14, 14' verengt, so daß der Außendurchmesser des Sicherungsringes 8 auf ein Maß reduziert wird, das ein koaxiales Einschieben in die Durchbrechung 2 bis hin zur Ringnut 13 ermöglicht. Dort überläßt man den Sicherungsring 8 wieder seiner selbst, so daß er aufgrund der federelastischen Aufweitungstendenz lösbar einschnappt und festsitzt. Als Montagehilfsmittel wird zweckmäßigerweise eine nicht näher dargestellte Montagezange verwendet, die sich an den beiden Ringenden 14, 14' ansetzen läßt. Diese verfügen daher über von Ausnehmungen gebildete Werkzeugangriffspartien 17, in die sich die Montagezange formschlüssig einstecken läßt, um den Sicherungsring 8 anschließend problemlos zu verengen.

Bei integraler Ausgestaltung des Ringteils 12 empfiehlt sich die Verwendung eines durchgehend gleichen Materials, insbesondere ein Kunststoffmaterial und hierbei insbesondere ein Polymermaterial. Aber auch Metall wäre geeignet, insbesondere Federstahlmaterial in nichtrostender Qualität.

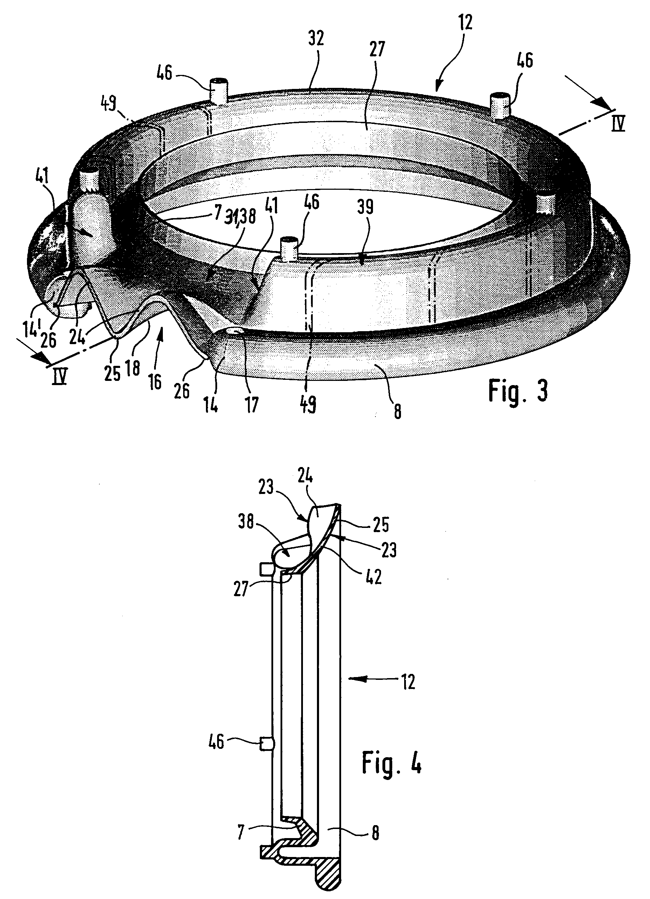

Der Sicherungsring 8 befindet sich zweckmäßigerweise im radial außen liegenden Umfangsbereich des Abstreifringes 7. Auf diese Weise ist der Zwischenraum 16 radial innen vom dem Abstreifring 7 begrenzt. Der Zwischenraum 16 kann offen sein, so daß in seinem Bereich eine axiale, auch nach radial außen offene Durchbrechung vorliegt. Bei dem gezeigten Ausführungsbeispiel ist der Zwischenraum 16 allerdings nicht offen, sondern durch eine flexible Abschirmwand 18 verschlossen, die besonders gut aus Figur 3 ersichtlich ist. Die Abschirmwand 18 ist insbesondere einstückig an die den Zwischenraum 16 radial innen begrenzende Begrenzungspartie 22 des Abstreifringes 7 angeformt und verläuft ausgehend von dort radial nach außen bis zur verlängerten Außendurchmesserlinie des Sicherungsringes 8, wobei sie auch seitlich im Bereich der beiden Ringenden 14, 14' insbesondere einstückig an den Sicherungsring 8 bzw. die anschließenden Partien des Abstreifringes 7 angeformt ist. Somit wird verhindert, daß Verunreinigungen zwischen der Abstreifvorrichtung 4 und der Halterung 1 im Bereich des Zwischenraumes 16 hindurchtreten, es ergibt sich eine ringsum ununterbrochene Abdichtung zwischen der Abstreifvorrichtung 4 und der Wandung der Ringnut 13.

Durch die Flexibilität der Abschirmwand 18 bleibt das Verformungsvermögen des Sicherungsringes 8 voll erhalten. Die Abschirmwand 18 könnte beispielsweise eine gummielastische Haut sein, die je nach Breite des Zwischenraumes 16 mehr oder weniger stark gespannt ist. Wegen der Abstreiffunktion wird das Ringteil 12 jedoch regelmäßig aus steiferem, härterem hartelastischem Material bestehen, in welchem Falle man die notwendige Flexibilität vorzugsweise durch eine wellen- oder faltenartige Gestaltung der Abschirmwand 18 gewährleistet. Die Scheitellinien 23 der einzelnen Wellen- bzw. Faltenabschnitte verlaufen hierbei im wesentlichen radial, wobei die Wellen- bzw. Faltenhöhe ausgehend von der Begrenzungspartie 22 nach radial außen hin vorzugsweise zunimmt. Beim Ausführungsbeispiel verfügt die Abschirmwand 18 über zwei in Gebrauchsstellung nach axial außen erhabene Wellenberge 24, zwischen denen sich ein Wellental 25 erstreckt, und die auch jenseits des zentralen Wellentals 25 in jeweils ein Wellental 26 übergehen, in dessen Bereich sie jedoch an die Ringenden 14, 14' angeformt sind. Wird der Sicherungsring 8 im Sinne einer Durchmesserverringerung verformt, so vergrößert sich die Wellenhöhe bei gleichzeitiger Verringerung der Wellenbreite.

Der Abstreifring 7 verfügt an der dem Sicherungsring 8 radial entgegengesetzten Innenseite über eine in sich geschlossene ringförmige Abstreiflippe 27. Ihr freies Ende ist in Gebrauchsstellung gesehen entgegen der Einfahrrichtung 6 nach außen gewandt, wobei sie mit diesem freien Ende vorzugsweise schräg unter einem geringen spitzen Winkel auf die Außenfläche 29 des stangenartigen Bauteils 3 zuläuft. Auf diese Weise ergibt sich ein optimaler Abstreifeffekt. Die Abstreiflippe 27 kann auch einen abgeknickten Verlauf haben, wobei sie beim Ausführungsbeispiel einfach abgeknickt ist, so daß sich an den relativ flach auslaufenden Endbereich ein steiler stehender weiterer Bereich 28 anschließt.

In dem radial zwischen dem Sicherungsring 8 und der Abstreiflippe 27 liegenden konzentrischen Bereich verfügt der Abstreifring 7 über eine wulstartige Ausformung 32 oder Ausbauchung, die in Gebrauchsstellung gesehen entgegen der Einfahrrichtung 6 nach axial außen vorspringt. Sie stellt einen Verformungsbereich dar, der den Abstreifring 7 von dem Sicherungsring 8 quasi entkoppelt, so daß letzterer im Rahmen der Montage oder Demontage unabhängig vom Abstreifring 7 und dessen Abstreiflippe 27 verengt oder aufgeweitet werden kann. Die Ausformung 32 erstreckt sich konzentrisch um die Abstreiflippe 27 und somit in Ringumfangsrichtung 15. Im Bereich der Ausformung bzw. Ausbauchung 32 ist der Abstreifring 7 im Querschnitt gesehen U-ähnlich profiliert, wobei im Bereich ihrer Rückseite eine der Ausnehmung des U entsprechende, sich vorzugsweise über die gesamte Umfangslänge der Ausformung bzw. Ausbauchung 32 erstreckende nutähnliche Vertiefung 33 vorgesehen ist. Die Hochachse des U ist hierbei in Längsrichtung 34 des Ringteils 12 ausgerichtet, so daß die offene Vertiefung 33 in Einfahrrichtung 6 weist. Somit sind im Bereich der Ausformung bzw. Ausbauchung 32 zwei einander koaxial umschließende hohlzylindrische Wandabschnitte 35, 36 vorhanden, die radial zueinander beabstandet sind, wobei am freien Endbereich des äußeren Wandabschnittes 35 der Sicherungsring 8 und am freien Endbereich des inneren Wandabschnittes 36 die Abstreiflippe 27 angeformt ist. Der im Scheitelbereich 39 der Ausformung bzw. Ausbauchung 32 vorgesehene Verbindungsbereich zwischen den beiden Wandabschnitten 35, 36 kann ein Verformungsabschnitt sein, um den sich die beiden Wandabschnitte 35, 36 relativ zueinander verbiegen lassen. Der äußere Wandabschnitt 35 ist zweckmäßigerweise länger als der innere Wandabschnitt 36, so daß der Sicherungsring 8 im Querschnitt gemäß Figur 1 gesehen bezüglich der Abstreiflippe 7 axial zurückversetzt ist, was das radiale Verformungsvermögen des Sicherungsringes 8 mit Bezug zum Abstreifring 7 weiter verbessert. Die Abstreiflippe 27 kommt in Gebrauchsstellung dabei zweckmäßigerweise in dem sich nach axial außen hin anschließenden Durchbrechungsabschnitt 37 zu liegen.

Es wäre auch zum Beispiel denkbar, den Verformungsbereich nach Art einer Faltenstruktur auszubilden. Dadurch kann der Sicherungsring ebenfalls betätigt werden, ohne daß sich die Kontur der Abstreiflippe verändert und insbesondere ohne ein Ausbeulen derselben in radialer Richtung.

Damit der Abstreifring 7 in den sich radial nach innen an den Zwischenraum 16 anschließenden Bereichen ausreichend verformungselastisch ist, um die für die Montage erforderliche Verformbarkeit des Sicherungsringes 8 zu gewährleisten, ist die wulstartige Ausformung bzw. Ausbauchung 32 im radialen Nachbarschaftsbereich des Zwischenraumes 16 bzw. der dort vorhandenen Abschirmwand 18 vorzugsweise mit einer Unterbrechung 31 versehen. Diese kann sich beispielsweise auf den äußeren Wandabschnitt 35 und eventuell zusätzlich auf den anschließenden Scheitelbereich 39 beschränken. Es bleibt dann zumindest der innere Wandabschnitt 36 durchgehend stehen, wie es in Figur 2 bei 36' angedeutet ist. Diese Bauform empfiehlt sich vor allem dann, wenn der oben erwähnte Zwischenraum 16 offen ist. Es ist dann gewährleistet, daß axial innerhalb der Abstreifvorrichtung 4 sich ansammelnder Schmutz nach außen treten kann. Füllt man die Vertiefung 33 zusätzlich mit Fett wird einem Eindringen von in der Atmosphäre befindlichen Verunreinigungen entgegengewirkt.

Beim Ausführungsbeispiel ist die Unterbrechnung 31 jedoch radial durchgehend ausgebildet und erstreckt sich somit auch auf den inneren Wandabschnitt 36, so daß eine aus Figur 3 gut ersichtliche Lücke 38 bzw. ein Freiraum vorhanden ist, in deren Bereich die Abstreiflippe 27 ohne Wulst mit einem gleichmäßig gekrümmten Wandabschnitt 42 (Figur 4) in die Abschirmwand 18 oder den statt dieser vorhandenen offenen Zwischenraum 16 übergeht. An ihren einander zugewandten Enden 41 ist die Ausformung bzw. Ausbauchung 32 dann zweckmäßigerweise geschlossen.

Bei Bedarf kann die Ausformung bzw. Ausbauchung 32 als Träger für einen weiteren zweiten Abstreifring 43 dienen. Ein solcher ist beim Ausführungsbeispiel vorhanden, er ist dem mit dem Sicherungsring 8 einstückig verbundenen ersten Abstreifring 7 entgegen der Einfahrrichtung 6 koaxial vorgelagert. Mit einer Abstreiflippe 44 liegt er in Gebrauchsstellung der Abstreifvorrichtung 4 ebenfalls am Außenfang 29 des stangenförmigen Bauteils 3 an. Er besteht zumindest im Bereich der Abstreiflippe 44 aus härterem Material als der erste Abstreifring 7, so daß er auch gröbere und sehr stark anhaftende Verunreinigungen von dem Bauteil 3 abstreift, ohne nennenswertem Verschleiß ausgesetzt zu sein. Da somit die entsprechenden Verunreinigungen von dem nachgeschalteten ersten Abstreifring 7 ferngehalten werden, kann dieser zumindest im Bereich der Abstreiflippe 27 weicher als der zweite Abstreifring 43 ausgebildet sein, so daß sich bezüglich des Bauteils 3 ein gutes Anschmiegeverhalten ergibt und auch feinste Partikel oder Flüssigkeiten zuverlässig zurückgehalten werden. Beim Ausführungsbeispiel besteht der vorgeschaltete zweite Abstreifring 43 aus Metall, insbesondere aus Edelstahl.

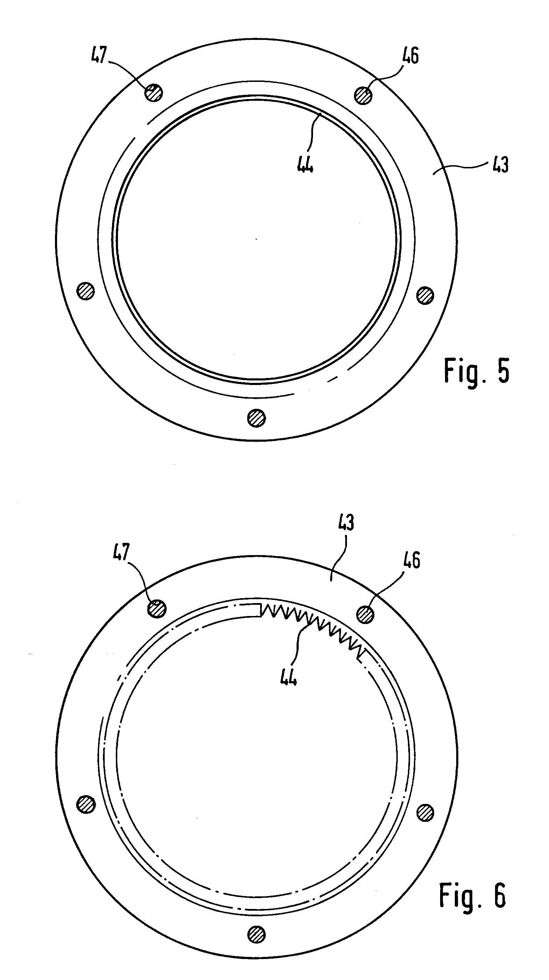

Bei der in Figur 6 gezeigten Variante des zweiten Abstreifringes 43 ist die Abstreiflippe 44 im Kontaktbereich mit dem stangenförmigen Bauteil 3 faltenartig oder zick-zack-förmig konturiert, was ein gewisses Verformungsvermögen zur Folge hat, das in einem selbsttätigen Toleranzausgleich bezüglich des Durchmessers des stangenförmigen Bauteils 3 resultiert.

Als Befestigungsstelle für den zweiten Abstreifring 43 fungiert zweckmäßigerweise der in Gebrauchsstellung entgegen der Einfahrrichtung 6 axial nach außen vorspringende Scheitelbereich 39 der wulstartigen Ausformung 32. Dort sind - in Umfangsrichtung 15 beabstandet - mehrere axial ausgerichtete Vorsprünge 46 angeformt. Sie haben ursprünglich eine aus Figur 3 ersichtliche säulen- oder noppenartige Gestalt. Der zweite Abstreifring 43 verfügt über eine dem Verteilungsmuster der Vorsprünge 46 entsprechend angeordnete Anzahl von als Durchbrechungen 47 ausgebildeten Ausnehmungen und ist koaxial auf den Scheitelbereich 39 aufgesetzt, so daß die Vorsprünge 46 durch die Durchbrechungen 47 hindurchgreifen. Die überstehenden Endabschnitte werden anschließend zu verbreiterten Köpfen 48 verformt, die den Abstreifring 43 gegen den Scheitelbereich 39 andrücken. Eine solche mit einer Vernietung vergleichbare Befestigungsart ist relativ einfach zu verwirklichen und verspricht eine dauerhaft hohe Festigkeit. Die Verformung erfolgt vorzugsweise unter Wärmezufuhr, z.B. durch Ultraschallschweißen. Die Befestigungsstellen 46 sollten weitestmöglich von dem Zwischenraum 16 entfernt sein, damit der aufgesetzte zweite Abstreifring 43 das zur Montage der Abstreifvorrichtung 4 erforderliche Verformungsvermögen nicht beeinträchtigt.

Die Durchbrechungen 47 befinden sich zweckmäßigerweise in einem ringscheibenähnlichen Endabschnitt des Abstreifringes 43 der insgesamt als entsprechend geformte und gelochte Stahlscheibe ausgebildet sein kann.

Ist ein zweiter Abstreifring 43 vorhanden, bildet dieser zweckmäßigerweise zusammen mit dem ersten Abstreifring 7 und dem Sicherungsring 8 eine auf die oben beschriebene Art und Weise einheitlich handhabbare Montageeinheit. Wiederum braucht nur ein Bauteil montiert zu werden.

Es kann vorteilhaft sein, die wulstartige Ausformung 32 mit mehreren in Umfangsrichtung beabstandeten Schlitzen 49 zu versehen, wie es in Figuren 2 und 3 strichpunktiert angedeutet ist. Diese durchtrennen den U-Querschnitt jeweils insbesondere vollständig, d.h. sie erstrecken sich dann jeweils über den inneren und den äußeren Wandabschnitt 35, 36 und den diese verbindenden Scheitelbereich 39. Die Querschlitze 49 verbessern das tangentiale Verformungsvermögen des Sicherungsringes 8 bei der Montage. Der der Unterbrechung 31 diametral entgegengesetzte Bereich der wulstartigen Ausformung 32 kann schlitzlos bleiben, vorteilhaft ist die Querschlitzanordnung in den sich an die Unterbrechung 31 anschließenden Bereichen über einen Erstreckungsbereich von zum Beispiel etwa 120°.

Zweckmäßigerweise verlaufen die Querschlitze 49 - bei axialer Blickrichtung gemäß Figur 2 gesehen - nicht exakt radial, sondern sind in Richtung zu einer an die Abstreiflippe 27 angelegten Tangente schräg ausgerichtet. Sie können zum Beispiel tangential zur Abstreiflippe 27 verlaufen. Ihr dem äußeren Wandabschnitt 35 zugeordneter radialer Außenbereich 50 liegt zweckmäßigerweise in Umfangsrichtung näher zu der Unterbrechung 31 als ihr dem inneren Wandabschnitt 36 zugeordneter radialer Innenbereich 51. Werden bei der Montage die beiden Ringenden 14, 14' einander angenähert, verringert sich auch die Schlitzbreite der Querschlitze 49 und begünstigt somit die Verformbarkeit des Sicherungsringes 8 ohne Verformung der Abstreiflippe 27.

Um die Handhabung der oben erwähnten Montagezange zu erleichtern, verfügt die Durchbrechung 2 an einer Stelle ihres Umfanges zweckmäßigerweise über eine nutartige Längsvertiefung 52, die zu der entgegen der Einfahrrichtung 6 nach außen weisenden Stirnseite 53 der Halterung 1 hin offen ist und mit ihrem entgegengesetzten Endbereich die Ringnut 13 trifft (bei 54). Die Breite der Längsvertiefung 52 ist größer als der Abstand zwischen den beiden Werkzeugangriffspartien 17. Somit verbleibt ein aus Figur 2 gut ersichtliches Fenster, das ein problemloses Einführen des Montagewerkzeuges gestattet.

Die eingangs erwähnte ringförmige Dichtungsanordnung 5 wird zweckmäßigerweise von den die Montageeinheit bildenden Ringen 7, 8, 43 in Gebrauchslage gehalten. Der Sicherungsring 8 ragt radial ein Stück weit in die Durchbrechung 2 hinein, so daß er die Dichtungsanordnung 5 an der zugewandten Stirnseite axial flankiert. Die entgegengesetzte Stirnseite der Dichtungsanordnung 5 liegt an einer Ringstufe 55 der Durchbrechung 2 an. Bevorzugt verfügt die Dichtungsanordnung 5 über eine äußere Dichtlippe 56, die gegen die Innenumfangsfläche der Durchbrechung 2 arbeitet und ferner über zwei in entgegengesetzte axiale Richtungen weisende innere Dichtlippen 57, 58, die an dem stangenförmigen Bauteil 3 anliegen. Alle Dichtlippen 56, 57, 58 sind ringförmig ausgebildet und koaxial zueinander angeordnet. Sie sind zweckmäßigerweise einstückiger Bestandteil eines Elastomerteils 59, in das mindestens ein aus härterem Material bestehender und beispielsweise metallischer Stützring 60 zumindest teilweise eingebettet sein kann.

## Patentansprüche

1. Abstreifvorrichtung, mit einem Abstreifring (7) der in Gebrauchsstellung an einer Halterung (1) festgelegt ist und ein bezüglich ihm und der Halterung (1) axial bewegbares stangenförmiges Bauteil (3) umschließt, und mit einem federelastischen Sicherungsring (8), der zur axialen halterungsseitigen Fixierung des Abstreifringes (7) in eine an der Halterung (1) vorgesehene Ringnut (13) eingreift, und der zwei einander zugewandte Ringenden (14, 14') aufweist, die bei der Montage des Sicherungsringes (8) zur Herbeiführung einer Durchmesseränderung des Sicherungsringes (8) im Sinne einer Verringerung oder Vergrößerung ihres Abstandes relativ zueinander bewegbar sind, dadurch gekennzeichnet, daß der Abstreifring (7) und der Sicherungsring (8) unter Bildung einer Montageeinheit aneinander befestigt sind.

2. Abstreifvorrichtung nach Anspruch 1, dadurch gekennzeichnet, daß der Sicherungsring (8) und der Abstreifring (7) unter Bildung einer integralen Montageeinheit einstückig miteinander ausgebildet sind.

3. Abstreifvorrichtung nach Anspruch 1 oder 2, dadurch gekennzeichnet, daß der Abstreifring (8) und der Sicherungsring (8) aus Kunststoffmaterial und hierbei insbesondere aus Polymermaterial bestehen.

4. Abstreifvorrichtung nach Anspruch 1 oder 2, dadurch gekennzeichnet, daß der Abstreifring (7) und der Sicherungsring (8) aus Federstahlmaterial bestehen.

5. Abstreifvorrichtung nach einem der Ansprüche 1 bis 4, dadurch gekennzeichnet, daß der Sicherungsring (8) im radial außen liegenden Umfangsbereich des Abstreifringes (7) angeordnet ist.

6. Abstreifvorrichtung nach einem der Ansprüche 1 bis 5, dadurch gekennzeichnet, daß an den beiden Ringenden (14, 14') des Sicherungsringes (8) insbesondere als Ausnehmungen ausgebildete Werkzeugangriffspartien (17) vorgesehen sind, an denen ein zum Verengen oder Aufweiten des Sicherungsringes (8) dienendes Montagewerkzeug, insbesondere eine Montagezange, ansetzbar ist.

7. Abstreifvorrichtung nach einem der Ansprüche 1 bis 6, dadurch gekennzeichnet, daß in dem Zwischenraum (16) zwischen den beiden Ringenden (14, 14') des Sicherungsringes (8) eine mit den beiden Ringenden (14, 14') und mit der angrenzenden Partie (22) des Abstreifringes (7) insbesondere einstückig verbundene flexible Abschirmwand (18) vorgesehen ist.

8. Abstreifvorrichtung nach Anspruch 7, dadurch gekennzeichnet, daß die Abschirmwand (18) zwischen den beiden Ringenden (14, 14') wellen- oder faltenartig verläuft.

9. Abstreifvorrichtung nach einem der Ansprüche 1 bis 8, dadurch gekennzeichnet, daß der Abstreifring (7) in Gebrauchsstellung ausschließlich über den Sicherungsring (8) an der Halterung (1) abgestützt ist.

10. Abstreifvorrichtung nach einem der Ansprüche 1 bis 9, dadurch gekennzeichnet, daß in dem Verbindungsbereich zwischen dem Sicherungsring (8) und dem Abstreifring (7) ein Verformungsbereich (32, 39) ausgebildet ist, der ein im Sinne einer Durchmesseränderung erfolgendes Verbiegen des Sicherungsringes (8) relativ zur Abstreiflippe (27) des Abstreifringes (7) ermöglicht.

11. Abstreifvorrichtung nach Anspruch 10, dadurch gekennzeichnet, daß in dem radial zwischen dem Sicherungsring (8) und einer in Gebrauchsstellung am Umfang des stangenförmigen Bauteils (3) anliegenden ringförmigen Abstreiflippe (27) liegenden Bereich des Abstreifringes (7) eine sich in Umfangsrichtung (15) des Abstreifringes (7) erstreckende wulstartige Ausformung oder Ausbauchung (32) vorgesehen ist, die den Verformungsbereich bildet, und an deren Rückseite eine sich insbesondere über ihre gesamte Umfangslänge erstreckende Vertiefung (33) vorgesehen ist, derart, daß der Abstreifring (7) im Bereich der Ausformung bzw. Ausbauchung (32) im Querschnitt gesehen einen U-ähnlichen Wandverlauf besitzt.

12. Abstreifvorrichtung nach Anspruch 11, dadurch gekennzeichnet, daß die wulstartige Ausformung bzw. Ausbauchung (32) in dem dem Zwischenraum (16) zwischen den Ringenden (14, 14') des Sicherungsringes (8) radial benachbarten Bereich eine Unterbrechung (31) aufweist.

13. Abstreifvorrichtung nach Anspruch 12, dadurch gekennzeichnet, daß die Unterbrechung (31) radial durchgehend ausgebildet ist, derart, daß zwischen zwei Endbereichen (41) der Ausformung bzw. Ausbauchung (32) ein Freiraum (38) vorliegt.

14. Abstreifvorrichtung nach einem der Ansprüche 11 bis 13, dadurch gekennzeichnet, daß die wulstartige Ausformung oder Ausbauchung (32) mit Querschlitzen (49) versehen ist, die zweckmäßigerweise bezüglich der Radialrichtung schräg verlaufen.

15. Abstreifvorrichtung nach einem der Ansprüche 11 bis 14, dadurch gekennzeichnet, daß außen an der wulstartigen Ausformung (32), insbesondere in deren Scheitelbereich (39), ein weiterer Abstreifring (43) festgelegt ist, der dem mit dem Sicherungsring (8) fest verbundenen Abstreifring (7) koaxial vorgelagert ist.

16. Abstreifvorrichtung nach Anspruch 15, dadurch gekennzeichnet, daß an der wulstartigen Ausformung (32) in deren Umfangsrichtung (15) beabstandet mehrere Vorsprünge (46) angeordnet sind, auf die der weitere Abstreifring (43) mit komplementären Ausnehmungen (47) aufgesetzt ist.

17. Abstreifvorrichtung nach Anspruch 15 oder 16, dadurch gekennzeichnet, daß der weitere Abstreifring (43) aus härterem Material als der mit dem Sicherungsring (8) verbundene Abstreifring (7) besteht.

18. Abstreifvorrichtung nach Anspruch 17, dadurch gekennzeichnet, daß der weitere Abstreifring (43) eine in Gebrauchsstellung am Außenumfang des stangenförmigen Bauteils (3) anliegende Abstreiflippe (44) aufweist, die faltenartig strukturiert ist.

19. Abstreifvorrichtung nach einem der Ansprüche 1 bis 18, dadurch gekennzeichnet, daß der Montageeinheit (7, 8) in Gebrauchsstellung eine separate ringförmige Dichtungsanordnung (5) nachgeordnet ist, die von der Montageeinheit (7, 8) axial an Ort und Stelle gehalten wird.

20. Abstreifvorrichtung nach einem der Ansprüche 1 bis 19, dadurch gekennzeichnet, daß die Ringnut (13) an der Innenumfangsfläche einer in der Halterung (1) vorgesehenen Durchbrechung (2) ausgebildet ist.

21. Abstreifvorrichtung nach Anspruch 20, dadurch gekennzeichnet, daß die Halterung (1) an einer Stelle des Umfanges der Durchbrechung (2) eine in deren Innenumfangsfläche eingebrachte, die Ringnut (13) treffende Längsvertiefung (52) aufweist, deren Breite größer ist als der Abstand zwischen den Ringenden (14, 14') des Sicherungsringes (8) im montierten Zustand.
